# EUROPEAN PATENT SPECIFICATION

(11) **EP 4 497 580 B1**
(45) Date of publication and mention of the grant of the patent: **20.08.2025**
(21) Application number: 23187916.4
(22) Date of filing: 26.07.2023
(51) Int. Cl.: B29C 70/46, B29C 43/02, B29C 65/02, B29C 65/18, B62K 19/16, B62K 19/18, B29D 99/00, B29L 31/30, B29K 101/12

(54) **MANUFACTURING METHOD OF THERMOPLASTIC COMPOSITE BICYCLE FRAME**
HERSTELLUNGSVERFAHREN FÜR FAHRRADRAHMEN AUS THERMOPLASTISCHEM VERBUNDSTOFF
PROCÉDÉ DE FABRICATION D'UN CADRE DE BICYCLETTE EN MATÉRIAU COMPOSITE THERMOPLASTIQUE

(43) Date of publication of application: 29.01.2025
(73) Proprietor: Astro Tech Co., Ltd., Changhua County (TW)
(72) Inventor: HU, Samuel, Changhua City, Changhua County (TW); LIU, Liu-Cheng, Changhua City, Changhua County (TW); CHEN, Yan-Hsun, Changhua City, Changhua County (TW)
(74) Representative: Melchior, Robin

(56) References cited:
- EP-B1- 3 670 158
- US-A1- 2014 191 492

## Description

### BACKGROUND

### 1. Field of the Invention

The present invention relates to a forming technique for a bicycle frame component, and more particularly to a manufacturing method of a thermoplastic composite bicycle frame via applying compression molding to thermoplastic composite materials.

### 2. Description of Related Art

Aiming to higher mass production capability, a conventional manufacturing method of a thermoplastic composite bicycle frame utilizes compression molding to combine multiple shells.

However, the conventional manufacturing method of a thermoplastic composite bicycle frame separates a bicycle frame into several bicycle frame units at curved parts in order to solve stress concentration. The several bicycle frame units are produced respectively and connected with a bicycle frame component afterwards. In this way, the operational steps are complicated, and a substantially complete bicycle frame component cannot be made directly.

EP 3 670 158 B1 discloses a method for forming a bicycle frame component.

### SUMMARY OF THE INVENTION

The main objective of the present invention is to provide a manufacturing method of a thermoplastic composite bicycle frame which improves on the disadvantages of the conventional manufacturing method with a simplified and direct process.

The manufacturing method of a thermoplastic composite bicycle frame comprises a shell forming step: turning thermoplastic composite laminates into multiple shells by compression molding, wherein the multiple shells are capable of being assembled together, each one of the multiple shells has a cavity surrounded by the shell, at least one straight segment and at least one curved segment connected with the at least one straight segment, the straight segments of the multiple shells are aligned with one another, the curved segments of the multiple shells are aligned with one another, each straight segment has a straight connecting edge, and each curved segment has a curved connecting edge; a shell assembling step: assembling the multiple shells to make the straight connecting edges of the multiple shells overlapped with one another and to make the curved connecting edges of the multiple shells butt jointed with one another rather than being overlapped; and a hot pressing step: through compression molding, turning the overlapped straight connecting edges and the butt jointed curved connecting edges of the multiple shells into multiple fusion areas by heating and compressing so as to connect the multiple shells as a bicycle frame component.

Other objectives, advantages and novel features of the invention will become more apparent from the following detailed description when taken in conjunction with the accompanying drawings.

### BRIEF DESCRIPTION OF THE DRAWINGS

In the drawings:
Fig. 1 illustrates a shell forming step of a preferred embodiment of a manufacturing method of a thermoplastic composite bicycle frame in accordance with the present invention;
Fig. 2 is an exploded perspective view of two shells of the manufacturing method in Fig. 1;
Fig. 3 is a perspective view of the two shells in Fig. 2 after a shell assembling step of the manufacturing method;
Fig. 4 is an enlarged side view of the assembled two shells in Fig. 3;
Fig. 5 is a cross-sectional side view along an A-A cutting line in Fig. 4;
Fig. 6 is a cross-sectional side view along a B-B cutting line in Fig. 4;
Fig. 7 is a top view of the bicycle frame part shown in Fig. 4;
Fig. 8 illustrates a cross-sectional side view of a reinforcement step and a hot pressing step of the manufacturing method in Fig. 1; and
Fig. 9 is a cross-sectional side view along a C-C cutting line in Fig. 7.

### DETAILED DESCRIPTION OF THE INVENTION

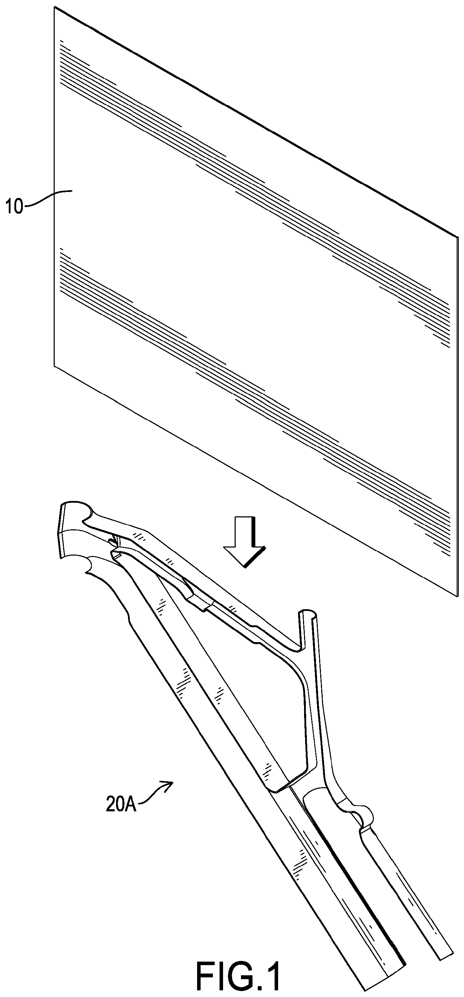

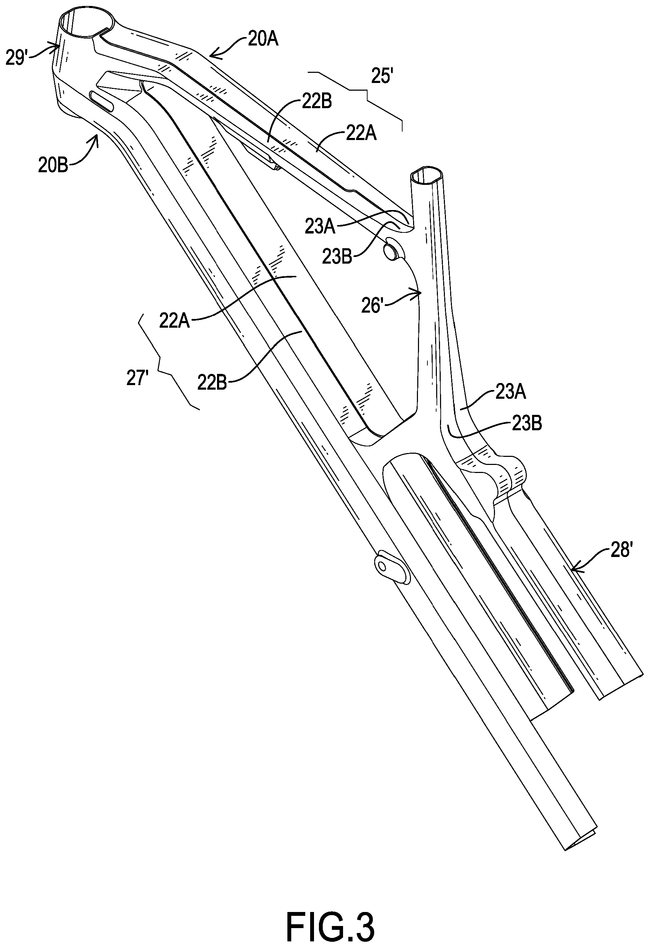

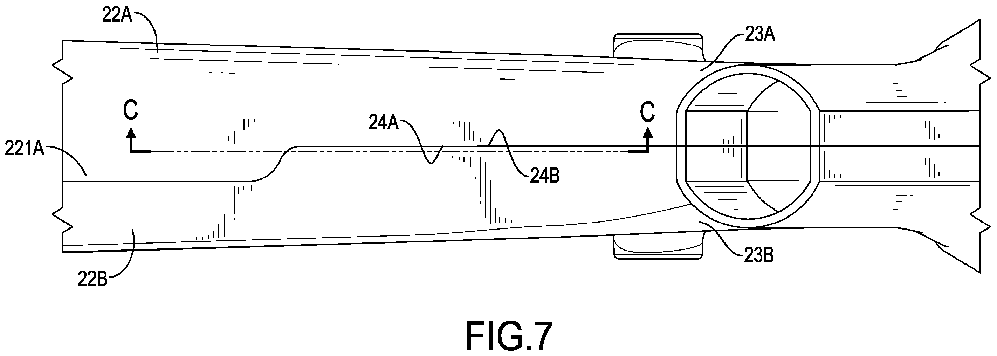

A manufacturing method of a thermoplastic composite bicycle frame in accordance with the present invention mainly comprises a shell forming step, a shell assembling step, and a hot pressing step. The manufacturing method of the present invention is adapted to produce a substantially complete bicycle frame component, and a preferred embodiment thereof is shown in Figs. 1 to 9.

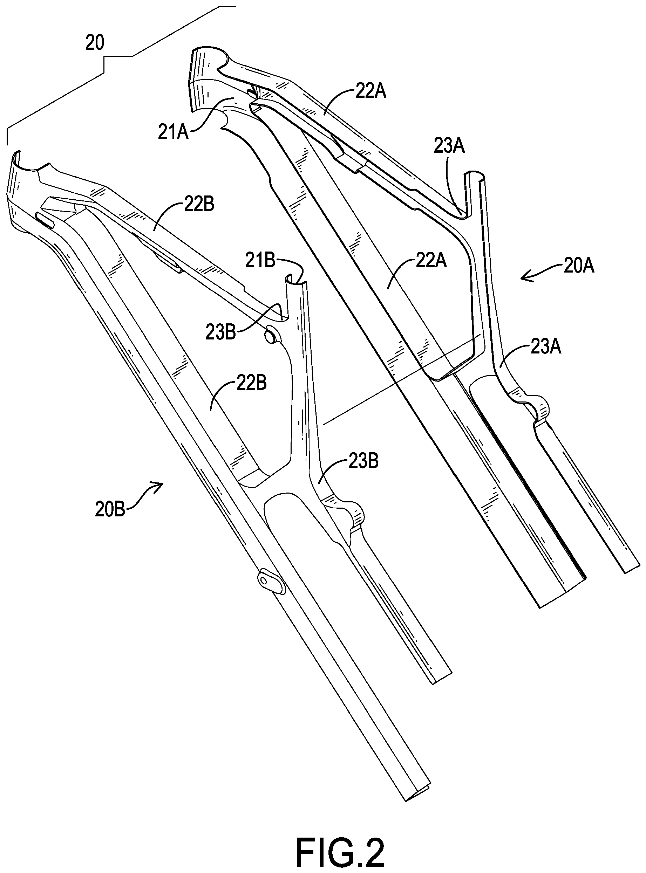

The shell forming step: With reference to Figs. 1 to 2, the present invention separates a bicycle frame component 20 into two shells 20A, 20B that are capable of being assembled together in a bilateral symmetry. In the shell forming step, thermoplastic composite laminates 10 are made of carbon fiber reinforced thermoplastic composite laminates or glass fiber reinforced thermoplastic composite laminates, and are turned into the shells 20A, 20B by compression molding accompanied with appropriate trimming.
With reference to Fig. 2, each one of the shells 20A, 20B comprises a cavity 21A, 21B surrounded by the shell 20A, 20B, at least one straight segment 22A, 22B and at least one curved segment 23A, 23B connected with said straight segment 22A, 22B. The straight segments 22A, 22B of the two shells 20A, 20B are aligned with each other. The curved segments 23A, 23B of the two shells 20A, 20B are aligned with each other. In the preferred embodiment of the present invention, each one of the two shells 20A, 20B has multiple said straight segments 22A, 22B and multiple said curved segments 23A, 23B.

For example, the straight segments 22A, 22B include a top tube, a down tube of the bicycle frame component 20 and other substantially straight portions. The curved segments include a connecting part of a head tube and the top tube, a connecting part of the head tube and the down tube, a connecting part of the top tube and a seat tube, a connecting part of the seat tube and a motor mount, and other curved portions.

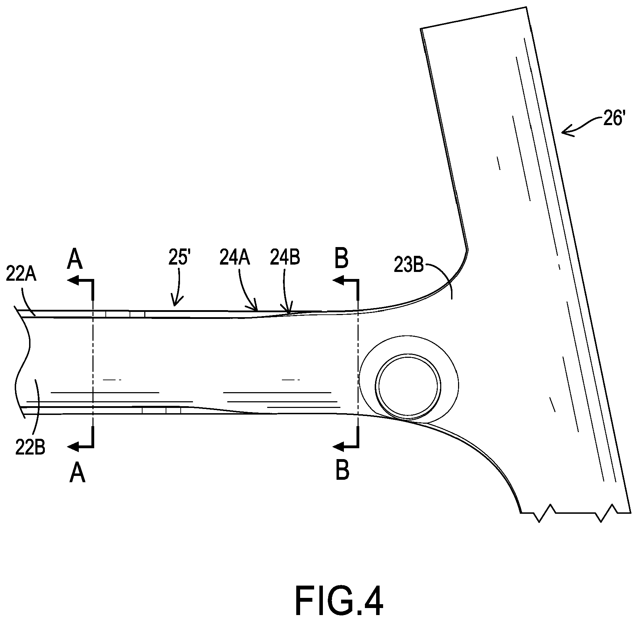

Furthermore, with reference to Figs. 4 to 7, each said straight segment 22A, 22B has a straight connecting edge 221A, 221B which is used for connecting the shells 20A, 20B. Each said curved segment 23A, 23B has a curved connecting edge 231A, 231B which is used for connecting the shells 20A, 20B.

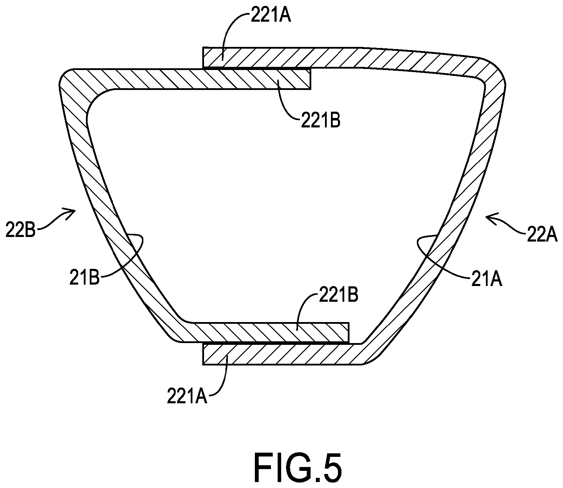

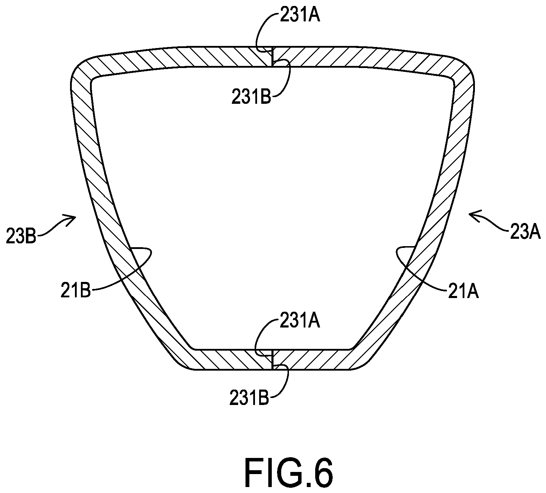

The shell assembling step: with reference to Figs. 2 to 4 and 7, assembling the two shells 20A, 20B to make the straight connecting edges 221A, 221B of the two shells 20A, 20B overlapped with one another and to make the curved connecting edges 231A, 231B of the two shells 20A, 20B butt jointed, i.e. end sides of the curved connecting edges completely cover one another. Specifically, with reference to Fig. 5, in the preferred embodiment of the present invention, the two shells 20A, 20B are assembled by inserting the straight connecting edges 221B of the straight segments 22B of one of the two shells 20B into the cavity 21A of the other shell 20A, and the straight connecting edges 221A, 221B of the two shells 20A, 20B thereby form an overlapping configuration. On the other hand, with reference to Fig. 6, the curved connecting edges 231A, 231B of the two shells 20A, 20B abut each other without extending into any one of the cavities 21A, 21B of the two shells 20A, 20B, and form a butt joint configuration instead of an overlapping one.

With aforementioned operational steps, the two shells 20A, 20B are assembled and form a prestructure of parts of a bicycle frame, including but not limited to a top tube portion 25', a seat tube portion 26', a down tube portion 27', a motor mount portion 28', and a head tube portion 29'. After the following hot pressing, those parts are turned into the top tube, the seat tube, the down tube, the motor mount, and the head tube of the bicycle frame serially.

In terms of the embodiment shown in the drawings, for enabling the straight connecting edges 221A, 221B of the two shells 20A, 20B to overlap, the end side of each one of the straight connecting edges 221A, 221B oversteps a width of about 2.5 to 6 mm from a symmetric line of the bicycle frame component 20. Thereby, when the two shells 20A, 20B are overlapped, the corresponding straight connecting edges 221A, 221B have an overlapping width of about 5 to 12 mm. With reference to Fig. 5, the overlapping width is about 8 mm.

In other embodiments, the bicycle frame component may be separated into three or more shells that are assemblable. As long as the technical features of the straight segments and the curved segments of the shells comply with the present invention, amount of the shells is not restricted by the present invention.

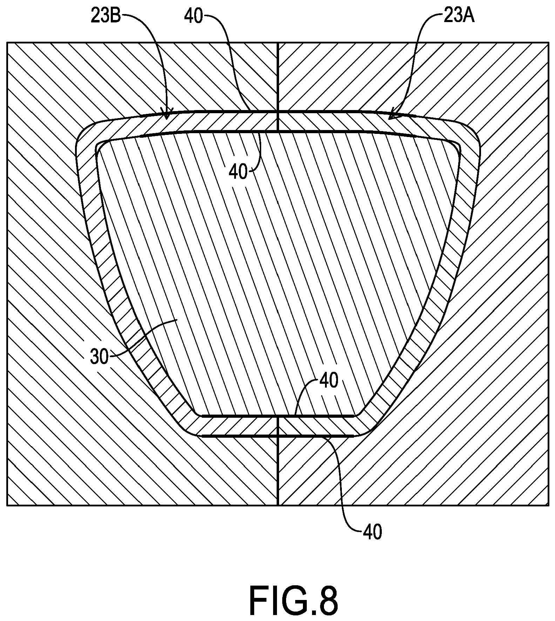

The hot pressing step: with reference to Fig. 8, through compression molding, turning the overlapped straight connecting edges 221A, 221B and the butt jointed curved connecting edges 231A, 231B of the two shells 20A, 20B into multiple fusion areas by heating and compressing so as to connect the shells 20A, 20B as a bicycle frame component 20.

Since stress concentration easily occurs at the curved segments 23A, 23B of the thermoplastic composite bicycle frame during the forming processes, the butt joint configuration (rather than an overlapping configuration) of the curved connecting edges 231A, 231B of the two shells 20A, 20B effectively eliminates stress at curved parts of the bicycle frame, controls shapes of bicycle frame components at a low defect rate, and favors producing substantially complete bicycle frame component by saving mounting processes of multiple bicycle frame units.

Moreover, with reference to Fig. 8, the manufacturing method of the present invention, before the hot pressing step, disposing a supporting unit 30 within the two shells 20A, 20B to support the shells 20A, 20B, and after the hot pressing step, removing the supporting unit 30 accompanied with trimming to finish the bicycle frame component 20. The supporting unit 30 may be made of metal, foam, wax, or even an air bag for molding, etc. The form of the supporting unit 30 is not limited in the present invention.

Furthermore, in the preferred embodiment of the present invention, the manufacturing method comprises a reinforcement step: attaching reinforcement material 40 on at least one of an interior and an exterior of the butt jointed curved connecting edges 231A, 231B of the two shells 20A, 20B. Preferably, with reference to Fig. 8, said reinforcement material 40 is attached on both of the interior and the exterior of the curved connecting edges 231A, 231B. And in the hot pressing step, the reinforcement material 40 is cured. Material and curing of said reinforcement material 40 are conventional knowledge and skills, so detailed description is omitted.

Thereby, in order to prevent damages of the bicycle frame component 20 from the weak curved segments 23A, 23B (due to stress concentration), said reinforcement material 40 can be used to improve structural strength. If the curved connecting edges 231A, 231B are overlapped, in the hot pressing step, the curved connecting edges 231A, 231B form thicker fusion areas and form step differences, and then problems of mold clamping and wrinkling of the reinforcement material 40 may occur. Mold clamping means that the reinforcement material 40 is pinched by molds for hot pressing and forms outwardly protruding superfluous material. Wrinkling means that the reinforcement material 40 is forced to inwardly fold and forms inward superfluous material. Both mold clamping and wrinkling cause defects of products which need further processing to repair. The present invention makes the curved segments 23A, 23B of the two shells 20A, 20B butt jointed rather than overlapping, effectively avoiding mold clamping and wrinkling and favoring the reinforcement step.

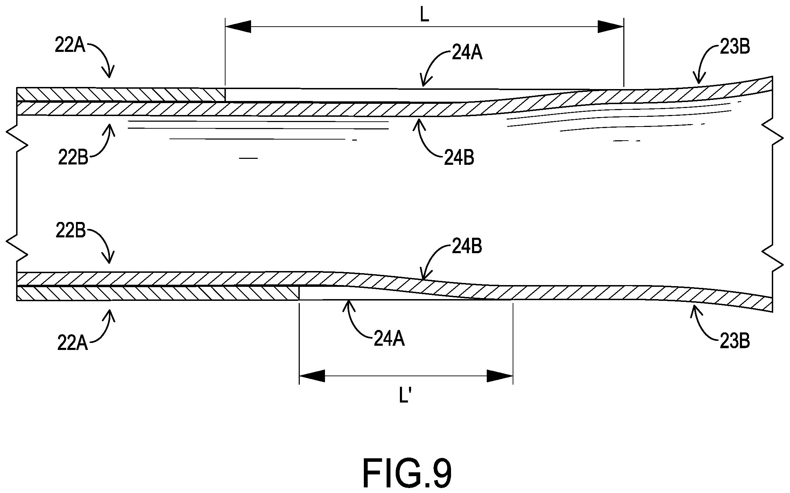

Preferably, with reference to Figs. 4, 7, and 9, in the shell forming step, forming a transitional segment 24A, 24B between adjacent said straight connecting edge 221A, 221B and said curved connecting edge 231A, 231B on each one of the two shells 20A, 20B. In the shell assembling step, with reference to Fig. 9, assembling the two shells 20A, 20B to make said transitional segment 24A, 24B of each one of the two shells 20A, 20B partially abutted with said transitional segment 24A, 24B of another said shell 20A, 20B, e.g. portions on the right end of said transitional segment 24A, 24B in Fig. 9 are presented as non-complete covering of abutting end sides of the transitional segments 24A, 24B. In addition, the transitional segments 24A, 24B of the two shells 20A, 20B are also partially mislaid as non-overlapping and non-abutting, e.g. portions on the left end of said transitional segment 24A, 24B in Fig. 9.

With reference to Fig. 9, a length L, L' of said transitional segment 24A, 24B falls within 10 to 100 millimeters inclusively. In this way, said transitional segment 24A, 24B is capable of effectively connecting the corresponding straight connecting edges 221A, 221B and the corresponding curved connecting edges 231A, 231B to save the latter from mutual interfering. Thereby feasibility of the manufacturing method of a thermoplastic composite bicycle frame of the present invention is further improved. The length rage of said transitional segment 24A, 24B also avoids positioning difficulties and weakening of structural strength. Preferably, the length L, L' of said transitional segment 24A, 24B falls within 30 to 50 millimeters inclusively, so better efficacy may be expected. In the reinforcement step, covering said transitional segment 24A, 24B with the reinforcement material 40.

With the aforementioned technical features, the curved segments 23A, 23B of the shells 20A, 20B are butt jointed with each other via the curved connecting edges 231A, 231B, and the straight segments 22A, 22B with lower requirements for stress relief and reinforcement are overlapped via the straight connecting edges 221A, 221B to facilitate positioning of the two shells 20A, 20B when assembling. The straight segments 22A, 22B and the curved segments 23A, 23B can jointly improve the quality of the bicycle frame component product by facilitating positioning, eliminating stress, and facilitating reinforcement respectively.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A manufacturing method of a thermoplastic composite bicycle frame, and the manufacturing method **characterized in** comprising the following steps:
a shell forming step: turning thermoplastic composite laminates (10) into multiple shells (20A, 20B) by compression molding, wherein
the multiple shells (20A, 20B) are capable of being assembled together;
each one of the multiple shells (20A, 20B) has a cavity (21A, 21B) surrounded by the shell (20A, 20B), at least one straight segment (22A, 22B) and at least one curved segment (23A, 23B) connected with the at least one straight segment (22A, 22B);
the straight segments (22A, 22B) of the multiple shells (20A, 20B) are aligned with one another;
the curved segments (23A, 23B) of the multiple shells (20A, 20B) are aligned with one another;
each straight segment (22A, 22B) has a straight connecting edge (221A, 221B); and
each curved segment (23A, 23B) has a curved connecting edge (231A, 231B);
a shell assembling step: assembling the multiple shells (20A, 20B) to make the straight connecting edges (221A, 221B) of the multiple shells (20A, 20B) overlapped with one another and to make the curved connecting edges (231A, 231B) of the multiple shells (20A, 20B) butt jointed with one another rather than being overlapped; and
a hot pressing step: through compression molding, turning the overlapped straight connecting edges (221A, 221B) and the butt jointed curved connecting edges (231A, 231B) of the multiple shells (20A, 20B) into multiple fusion areas by heating and compressing so as to connect the multiple shells (20A, 20B) as a bicycle frame component (20).

2. The manufacturing method as claimed in claim 1, wherein in the shell forming step, the thermoplastic composite laminates (10) are carbon fiber reinforced thermoplastic composite laminates or glass fiber reinforced thermoplastic composite laminates.

3. The manufacturing method as claimed in claim 1, wherein the manufacturing method comprises a reinforcement step: attaching reinforcement material (40) on at least one of an interior and an exterior of the butt jointed curved connecting edges (231A, 231B) of the multiple shells (20A, 20B), and in the hot pressing step, curing the reinforcement material (40).

4. The manufacturing method as claimed in claim **1,** wherein the manufacturing method comprises
in the shell forming step, forming a transitional segment (24A, 24B) between adjacent said straight connecting edge (221A, 221B) and said curved connecting edge (231A, 231B) on each one of the multiple shells (20A, 20B); and
in the shell assembling step, assembling the multiple shells (20A, 20B) to make said transitional segment (24A, 24B) of each one of the multiple shells (20A, 20B) partially abutted with and partially mislaid with said transitional segment (24A, 24B) of another said shell (20A, 20B).

5. The manufacturing method as claimed in claim **4,** wherein
the manufacturing method comprises a reinforcement step: attaching reinforcement material (40) on at least one of an interior and an exterior of the butt jointing curved connecting edges (231A, 231B) of the multiple shells (20A, 20B);
the reinforcement material (40) covers said transitional segment (24A, 24B); and
the manufacturing method, in the hot pressing step, curing the reinforcement material (40).

6. The manufacturing method as claimed in claim 4, wherein in the shell forming step, a length of said transitional segment (24A, 24B) falls within 10 to 100 millimeters inclusively.

7. The manufacturing method as claimed in any one of claims 1 to 6, comprising: before the hot pressing step, disposing a supporting unit (30) within the multiple shells (20A, 20B) to support the multiple shells (20A, 20B), and after the hot pressing step, removing the supporting unit (30) accompanied with trimming to finish the bicycle frame component (20).

## Patentansprüche

1. Herstellungsverfahren eines Fahrradrahmens aus thermoplastischem Verbundwerkstoff, wobei das Herstellungsverfahren durch die folgenden Schritte gekennzeichnet ist:
einen Schalenformungsschritt: durch Formpressen Umwandeln von thermoplastischen Verbundlaminaten (10) in mehrere Schalen (20A, 20B), wobei
die mehreren Schalen (20A, 20B) zusammengesetzt werden können;
jede der mehreren Schalen (20A, 20B) einen Hohlraum (21A, 21B) hat, der von der Schale (20A, 20B), mindestens einem geraden Segment (22A, 22B) und mindestens einem gebogenen Segment (23A, 23B), das mit dem mindestens einen geraden Segment (22A, 22B) verbunden ist, umgeben ist;
die geraden Segmente (22A, 22B) der mehreren Schalen (20A, 20B) aufeinander ausgerichtet sind;
die gebogenen Segmente (23A, 23B) der mehreren Schalen (20A, 20B) aufeinander ausgerichtet sind;
jedes gerade Segment (22A, 22B) eine gerade Verbindungskante (221A, 221B) aufweist; und
jedes gebogene Segment (23A, 23B) eine gebogene Verbindungskante (231A, 231B) aufweist;
einen Schalenmontageschritt: Zusammensetzen der mehreren Schalten (20A, 20B), so dass die geraden Verbindungskanten (221A, 221B) der mehreren Schalen (20A, 20B) einander überlappen und die gebogenen Verbindungskanten (231A, 231B) der mehreren Schalten (20A, 20B) aneinander stoßen, anstatt einander zu überlappen; und
einen Heißpressschritt: durch Formpressen Verwandeln der überlappenden geraden Verbindungskanten (221A, 221B) und der aneinanderstoßenden gebogenen Verbindungskanten (231A, 231B) der mehreren Schalen (20A, 20B) in mehrere Verbindungsbereiche durch Erhitzen und Pressen, um die mehreren Schalen (20A, 20B) zu einer Fahrradrahmenkomponente (20) zu verbinden.

2. Herstellungsverfahren nach Anspruch 1, wobei beim Schalenformungsschritt die thermoplastischen Verbundlaminate (10) kohlenstofffaserverstärkte thermoplastische Verbundlaminate oder glasfaserverstärkte thermoplastische Verbundlaminate sind.

3. Herstellungsverfahren nach Anspruch 1, wobei das Herstellungsverfahren einen Verstärkungsschritt aufweist: Befestigen von Verstärkungsmaterial (40) an mindestens einer von einer inneren und einer äußeren der aneinanderstoßenden gebogenen Verbindungskanten (231A, 231B) der mehreren Schalen (20A, 20B), und Aushärten des Verstärkungsmaterials (40) im Heißpressschritt.

4. Herstellungsverfahren nach Anspruch 1, wobei das Herstellungsverfahren Folgendes aufweist:
im Schalenformungsschritt Ausbilden eines Übergangssegments (24A, 24B) zwischen der benachbarten geraden Verbindungskante (221A, 221B) und der gebogenen Verbindungskante (231A, 231B) an jeder der mehreren Schalen (20A, 20B); und
im Schalenmontageschritt Zusammenbauen der mehreren Schalen (20A, 20B), um das Übergangssegment (24A, 24B) jeder der mehreren Schalen (20A, 20B) teilweise an das Übergangssegment (24A, 24B) einer anderen Schale (20A, 20B) anzulegen und teilweise versetzt dazu anzuordnen.

5. Herstellungsverfahren nach Anspruch 4, wobei
das Herstellungsverfahren einen Verstärkungsschritt aufweist: Anbringen von Verstärkungsmaterial (40) an mindestens einer von einer inneren und einer äußeren der aneinanderstoßenden gebogenen Verbindungskanten (231A, 231B) der mehreren Schalen (20A, 20B);
das Verstärkungsmaterial (40) das Übergangssegment (24A, 24B) bedeckt; und
das Herstellungsverfahren das Verstärkungsmaterial (40) im Heißpressschritt aushärtet.

6. Herstellungsverfahren nach Anspruch 4, wobei im Schalenformungsschritt eine Länge des Übergangssegments (24A, 24B) im Bereich von 10 bis einschließlich 100 Millimetern liegt.

7. Herstellungsverfahren nach einem der Ansprüche 1 bis 6, das aufweist: vor dem Heißpressschritt Anordnen einer Stützeinheit (30) innerhalb der mehreren Schalen (20A, 20B), um die mehreren Schalten (20A, 20B) zu stützen und nach dem Heißpressschritt Entfernen der Stützeinheit (30) zusammen mit Abkanten, um die Fahrradrahmenkomponente (20) fertigzustellen.

## Revendications

1. - Procédé de fabrication d'un cadre de bicyclette en composite thermoplastique, le procédé de fabrication étant **caractérisé en ce qu'**il comprend les étapes suivantes :
une étape de formation de carénages : transformation de stratifiés composites thermoplastiques (10) en de multiples carénages (20A, 20B) par moulage par compression, dans laquelle
les multiples carénages (20A, 20B) peuvent être assemblés entre eux ;
chacun des multiples carénages (20A, 20B) a une cavité (21A, 21B) entourée par le carénage (20A, 20B), au moins un segment droit (22A, 22B) et au moins un segment courbe (23A, 23B) raccordé à l'au moins un segment droit (22A, 22B) ;
les segments droits (22A, 22B) des multiples carénages (20A, 20B) sont alignés l'un par rapport à l'autre ;
les segments courbes (23A, 23B) des multiples carénages (20A, 20B) sont alignés l'un par rapport à l'autre ;
chaque segment droit (22A, 22B) a un bord de raccordement droit (221A, 221B) ; et
chaque segment courbe (23A, 23B) a un bord de raccordement courbe (231A, 231B) ;
une étape d'assemblage de carénages : assemblage des multiples carénages (20A, 20B) pour faire chevaucher les bords de raccordement droits (221A, 221B) des multiples carénages (20A, 20B) et pour joindre les bords de raccordement courbes (231A, 231B) des multiples carénages (20A, 20B) plutôt que de les faire chevaucher ; et
une étape de pressage à chaud : par moulage par compression, transformation des bords de raccordement droits chevauchants (221A, 221B) et des bords de raccordement courbes joints (231A, 231B) des multiples carénages (20A, 20B) en plusieurs zones de fusion par chauffage et compression de façon à raccorder les multiples carénages (20A, 20B) sous la forme d'un composant de cadre de bicyclette (20).

2. - Procédé de fabrication selon la revendication 1, dans lequel dans l'étape de formation de carénages, les stratifiés composites thermoplastiques (10) sont des stratifiés composites thermoplastiques renforcés de fibres de carbone ou des stratifiés composites thermoplastiques renforcés de fibres de verre.

3. - Procédé de fabrication selon la revendication 1, dans lequel le procédé de fabrication comprend une étape de renforcement : fixation du matériau de renforcement (40) sur au moins l'un d'un intérieur et d'un extérieur des bords de raccordement courbes joints (231A, 231B) des multiples carénages (20A, 20B), et lors de l'étape de pressage à chaud, durcissement du matériau de renforcement (40).

4. - Procédé de fabrication selon la revendication 1, dans lequel le procédé de fabrication comprend
lors de l'étape de formation de carénages, la formation d'un segment transitionnel (24A, 24B) entre ledit bord de raccordement droit (221A, 221B) et ledit bord de raccordement courbe (231A, 231B) adjacents sur chacun des multiples carénages (20A, 20B) ; et
lors de l'étape d'assemblage de carénages, l'assemblage des multiples carénages (20A, 20B) pour mettre ledit segment transitionnel (24A, 24B) de chacun des multiples carénages (20A, 20B) partiellement en butée et partiellement en contact avec ledit segment transitionnel (24A, 24B) d'un autre dudit carénage (20A, 20B).

5. - Procédé de fabrication selon la revendication 4, dans lequel
le procédé de fabrication comprend une étape de renforcement : fixation du matériau de renforcement (40) sur au moins l'un d'un intérieur et d'un extérieur des bords de raccordement courbes joints (231A, 231B) des multiples carénages (20A, 20B) ;
le matériau de renforcement (40) recouvre ledit segment transitionnel (24A, 24B) ; et
le procédé de fabrication, lors de l'étape de pressage à chaud, durcissant le matériau de renforcement (40).

6. - Procédé de fabrication selon la revendication 4, dans lequel dans l'étape de formation de carénages, une longueur dudit segment transitionnel (24A, 24B) se situe entre 10 et 100 millimètres inclus.

7. - Procédé de fabrication selon l'une quelconque des revendications 1 à 6, comprenant : avant l'étape de pressage à chaud, la disposition d'une unité de support (30) dans les multiples carénages (20A, 20B) pour soutenir les multiples carénages (20A, 20B), et après l'étape de pressage à chaud, le retrait de l'unité de support (30) accompagné de l'ébavurage pour finir le composant de cadre de bicyclette (20).
